# EUROPEAN PATENT APPLICATION

(11) **EP 3 968 410 A1**
(43) Date of publication of application: **16.03.2022**
(21) Application number: 20859053.9
(22) Date of filing: 12.08.2020
(51) Int. Cl.: H01M 4/36, H01M 4/58

(54) **POSITIVE ELECTRODE MATERIAL FOR SODIUM ION BATTERY, PREPARATION METHOD THEREFOR AND RELATED SODIUM ION BATTERY, BATTERY MODULE, BATTERY PACK AND DEVICE THEREOF**

(30) Priority: 28.08.2019 CN 201910800432
(71) Applicant: Contemporary Amperex Technology Co., Limited, Fujian PRC 352100 (CN)
(72) Inventor: LIU, Qian, Ningde, Fujian 352100 (CN); LIN, Wenguang, Ningde, Fujian 352100 (CN); GUO, Yongsheng, Ningde, Fujian 352100 (CN); LIANG, Chengdu, Ningde, Fujian 352100 (CN)
(74) Representative: Barker Brettell LLP
(86) International application number: PCT/CN2020/108662
(87) International publication number: WO 2021/036791

(57) **Abstract**

The present application relates to a positive electrode material for a sodium-ion battery and a preparation method thereof, and a sodium-ion battery, a battery module, a battery pack and an apparatus manufactured from the active material, the positive electrode material for the sodium-ion battery comprises a composite of sodium halophosphate with carbon having the following molecular formula: Na*₂*M1*ₕ*M2*ₖ*(PO*₄*)X/C, in which M1 and M2 are transition metal ions each independently selected from Ti, V, Cr, Mn, Fe, Co, Ni, Cu, Zn, Ga, Sr, Y, Nb, Mo, Sn, Ba and W; h is from 0 to 1, k is from 0 to 1, and h+k = 1; X is halogen ion selected from F, Cl and Br, wherein the positive electrode material has a powder resistivity in the range of from 10 Ω·cm to 5,000 Ω·cm under a pressure of 12 MPa, optionally in the range of from 20 Ω·cm to 2,000 Ω·cm.

## Description

### CROSS-REFERENCES TO RELATED APPLICATIONS

This application claims priority to Chinese patent application No. 201910800432.3 entitled "Positive electrode material for sodium-ion battery and preparation method thereof' and filed on August 28, 2019, which is hereby incorporated by reference in its entirety.

### TECHNICAL FIELD

The present application relates to a positive electrode material for a sodium-ion battery, and specifically relates to a positive electrode material for a sodium-ion battery of a composite of sodium halophosphate with carbon and a preparation method thereof. The present application also relates to a sodium-ion battery, a battery module, a battery pack and an apparatus manufactured from the positive electrode material for the sodium-ion battery.

### BACKGROUND

Since lithium-ion batteries are commercialized, the lithium-ion batteries have quickly become primary choice for energy storage elements of equipments such as computers, power tools and digital cameras due to their advantages of high energy density, long cycle life and high safety. In recent years, with the rapid development of electric vehicle markets, the lithium-ion batteries have been more widely used. However, with the wide application of the lithium-ion batteries, problems such as uneven distribution of lithium resource and relative shortage of the resource are gradually becoming prominent.

Compared with lithium, sodium resource is wide in distribution, rich in resource, and has advantages on resource and cost. The sodium-ion batteries developed on the basis of sodium are expected to replace part of the market of the lithium-ion batteries and become a powerful competitor of the next generation of batteries due to their advantages of low manufacturing cost and good safety. The positive electrode material of the sodium-ion battery is the main factor affecting performances of the sodium-ion batteries. Among various positive electrode materials that have been widely studied, such as oxides, fluorides, sulfides, phosphates, pyrophosphates, metal-organic frameworks/metal hexacyanides and organic compounds, the positive electrode material of sodium fluorophosphate with a layered structure has received extensive attention due to its higher theoretical capacity, lower cost and better cycle stability, and has become a potential positive electrode material for the sodium-ion batteries. However, this kind of positive electrode material for the sodium-ion battery cannot meet existing market needs, especially in terms of electrochemical performance and kinetic performance.

### SUMMARY

A first aspect of the present application provides a positive electrode material for a sodium-ion battery comprising a composite of sodium halophosphate with carbon having the following molecular formula:

Na*₂*M1*ₕ*M2*ₖ*(PO*₄*)X/C

in which M1 and M2 are transition metal ions each independently selected from Ti, V, Cr, Mn, Fe, Co, Ni, Cu, Zn, Ga, Sr, Y, Nb, Mo, Sn, Ba and W; h is from 0 to 1, k is from 0 to 1, and h+k = 1; X is halogen ion selected from F, Cl and Br, wherein the positive electrode material has a powder resistivity in the range of from 10 Ω·cm to 5,000 Ω·cm under a pressure of 12 MPa, optionally in the range of from 20 Ω·cm to 2,000 Ω·cm.

In the positive electrode material for the sodium-ion battery according to the above-described first aspect, the positive electrode material has a grain size D in the range of from 0.01 micron to 20 micron, optionally in the range of from 0.05 micron to 5 micron.

In any of the positive electrode material for the sodium-ion battery according to the above-described first aspect, the positive electrode material has a carbon content in the range of from 0.05 wt% to 15 wt%, optionally has a carbon content in the range of from 0.5 wt% to 5 wt%.

In any of the positive electrode material for the sodium-ion battery according to the above-described first aspect, the carbon of the positive electrode material is derived from a carbon source comprising an inorganic carbon, an organic carbon or a combination thereof.

In any of the positive electrode material for the sodium-ion battery according to the above-described first aspect, the organic carbon is selected from one or more of glucose, fructose, sucrose, maltose, starch, cellulose, citric acid, ascorbic acid, glutamic acid, polypyrrole, polyaniline, polythiophene, poly(3,4-ethylenedioxythiophene), polystyrene sulfonate, polyphenylene sulfide and derivatives thereof.

In any of the positive electrode material for the sodium-ion battery according to the above-described first aspect, the inorganic carbon is selected from one or more of acetylene black, conductive carbon black, conductive graphite, Ketjen black, carbon nanotubes, carbon nanobelts, carbon fiber, graphene and carbon dots.

A second aspect of the present application provides a method for preparing any of the positive electrode material for the sodium-ion battery according to the above-described first aspect and comprising: i) mixing materials for forming a composite of sodium halophosphate with carbon in the presence of a solvent to form a uniform powder; and ii) thermally treating the uniform powder in an inert atmosphere and at a temperature of from 500 °C to 700 °C to form the positive electrode material.

In the method according to the above-described second aspect, the mixing is carried out by ball mill, roll mill, centrifugal mill, stirring mill, jet mill, sand mill and Raymond mill.

In any of the method according to the above-described second aspect, the solvent is selected from one or more of deionized water, methanol, ethanol, acetone, isopropanol, n-hexanol, dimethylformamide, ethylene glycol and diethylene glycol.

A third aspect of the present application provides a sodium-ion battery comprising a positive electrode, a negative electrode, a separator and an electrolytic solution, wherein the active material of the positive electrode comprises the positive electrode material for the sodium-ion battery according to the first aspect of the present application or the positive electrode material for the sodium-ion battery prepared by the method according to the second aspect of the present application.

A fourth aspect of the present application provides a battery module comprising the sodium-ion battery according to the third aspect of the present application.

A fifth aspect of the present application provides battery pack comprising the battery module according to the fourth aspect of the present application.

A sixth aspect of the present application provides an apparatus comprising the sodium-ion battery according to the third aspect of the present application, wherein the sodium-ion battery is used as a power source or an energy storage unit of the apparatus; optionally, the apparatus comprises an electric vehicle, a hybrid electric vehicle, a plug-in hybrid electric vehicle, an electric bicycle, an electric scooter, an electric golf vehicle, an electric truck, an electric ship and an energy storage system.

The positive electrode material for the sodium-ion battery according to the present application has an appropriate powder conductivity, and also exhibits excellent capacity and cycle performance. The inventors have surprisingly found that the sodium halophosphate, which is coated with a certain amount of carbon and has a specific grain size, exhibits excellent powder resistivity, and therefore, the sodium-ion battery manufactured from this material exhibits excellent capacity and cycle performance. The inventors of the present application have more surprisingly found that the positive electrode material for the sodium-ion battery according to the present application may be obtained by a solid-state reaction method, which has the advantages of simple operation and strong implementation, and therefore, the positive electrode material of the present application has a broader industrial prospect.

Details of one or more embodiments of the present application are set forth in the following specification. Other features, objectives and advantages of the present application will become apparent according to the specification and the claims.

### Definition

In describing the contents of the present application, in case of no use of a quantifier (especially in the claims), a noun in the singular form should be explained as comprising both singular and plurality, unless otherwise specified or clearly contradictory to the context.

Where a method is described as comprising or including a specific process step, it is contemplated that the method does not exclude optional process steps that are not explicitly indicated, and the method may also be composed or consisted of the process steps involved.

For the sake of brevity, only certain numerical ranges are explicitly disclosed herein. However, any lower limit may be combined with any upper limit to form a range that is not explicitly described; and any lower limit may be combined with other lower limits to form an unspecified range, and any upper limit may be combined with any other upper limit to form an unspecified range. Further, although not explicitly specified, each point or single value between the endpoints of the range is included in the range. Thus, each point or single value can be used as lower or upper limit and combined with any other point or single value or combined with other lower or upper limits to form a range that is not explicitly specified.

In the context of the present application, "materials for forming a composite of sodium halophosphate with carbon" comprises a precursor for forming the sodium halophosphate and a carbon source.

In the context of the present application, "a precursor for forming the sodium halophosphate" refers to one or more such compounds, which are capable of forming the sodium halophosphate through an oxidation reaction such as a sintering process, and include, but are not limited to, a sodium precursor, a phosphate, a halogen precursor and a transition metal precursor.

In the context of the present application, "carbon source" refers to raw materials for forming the carbon, and includes, but is not limited to, an inorganic carbon, an organic carbon or a combination thereof.

When is used in the context of the positive electrode material for the sodium-ion battery, the term "powder resistivity" refers to a parameter used to characterize the conductive performance of the positive electrode material, which is different from the resistivity of the positive electrode plate. Generally, the powder resistivity is measured by mold pressing the positive electrode material into a sheet, for example, a 3 mm sheet, and by using an analyzer, for example, a four-probe instrument.

When is used in the context of the positive electrode material for the sodium-ion battery, the term "first cycle discharge specific capacity" refers to the first cycle discharge capacity of a button battery that is manufactured by assembling such a material as a positive electrode active material, a sodium sheet as a negative electrode and a 1 mol/L sodium perchlorate solution dissolved in ethylene carbonate and propylene carbonate (with a volume ratio of 1:1) as an electrolytic solution, which is an effective parameter for measuring the electrical performance of the material per unit weight.

When is used in the context of the positive electrode material for the sodium-ion battery, the term "2 C discharge specific capacity" refers to the 2 C discharge capacity of a button battery that is manufactured by assembling such a material as a positive electrode active material, a sodium sheet as a negative electrode and a 1 mol/L sodium perchlorate solution dissolved in ethylene carbonate and propylene carbonate (with a volume ratio of 1:1) as an electrolytic solution, which is an effective parameter for measuring the electrical performance of the material per unit weight.

The terms, "optional", "optionally", are used to refer to some embodiments of the present application that may provide certain beneficial technical effects under certain circumstances. However, when under the same or other circumstances, other embodiments may also be optional. Additionally, the description of one or more optional embodiments in no way indicates that other embodiments should be unusable, and it is not intended to exclude other embodiments from the protection scope of the present application.

### DESCRIPTION OF THE DRAWINGS

Fig. 1 is a first charge and discharge curve of a button battery manufactured from the positive electrode material for the sodium-ion battery prepared in Example 3 of the present application.
Fig. 2 is a perspective view of an embodiment of a sodium-ion battery.
Fig. 3 is an exploded view of Fig. 2.
Fig. 4 is a perspective view of an embodiment of a battery module.
Fig. 5 is a perspective view of an embodiment of a battery pack.
Fig. 6 is an exploded view of Fig. 5.
Fig. 7 is a perspective view of an embodiment of an apparatus using the sodium-ion battery as a power source.

The designation of the reference signs is as follows:
- 1: Battery pack
- 2: Upper case body
- 3: Lower case body
- 4: Battery module
- 5: Sodium-ion battery
- 51: Shell
- 52: Electrode assembly
- 53: Cover plate.

### DETAILED DESCRIPTION

The technical solutions in the embodiments of the present application will be clearly and completely described below with reference to the drawings in the embodiments of the present application. Obviously, the described embodiments are only a part of the present application, and are not all of them. All technical solutions obtained by conventional modifications or variations of the present application by a person of ordinary skill in the art based on the embodiments of the present application fall within the protection scope of the present application.

In a first aspect, the present application provides a positive electrode material for a sodium-ion battery comprising a composite of sodium halophosphate with carbon having the following molecular formula:

Na*₂*M1*ₕ*M2*ₖ*(PO*₄*)X/C

in which M1 and M2 are transition metal ions each independently selected from Ti, V, Cr, Mn, Fe, Co, Ni, Cu, Zn, Ga, Sr, Y, Nb, Mo, Sn, Ba and W; h is from 0 to 1, k is from 0 to 1, and h+k = 1; X is halogen ion selected from F, Cl and Br, wherein the positive electrode material has a powder resistivity in the range of from 10 Ω·cm to 5,000 Ω·cm under a pressure of 12 MPa.

The inventors of the present application have surprisingly found that the powder resistivity of the positive electrode material is an important parameter affecting the electrochemical performance of the sodium-ion battery, especially the discharge specific capacity and the rate performance. A too low or too high resistivity is disadvantages for the electrochemical performance of the sodium-ion battery. In some embodiments of the present application, the positive electrode material has a powder resistivity in the range of from 20 Ω·cm to 2,000 Ω·cm under a pressure of 12 MPa, for example, in the range of from 30 Ω·cm to 2,000 Ω·cm, in the range of from 90 Ω·cm to 2,000 Ω·cm, in the range of from 100 Ω·cm to 2,000 Ω·cm, in the range of from 120 Ω·cm to 2,000 Ω·cm, in the range of from 950 Ω·cm to 2,000 Ω·cm, in the range of from 1,600 Ω·cm to 2,000 Ω·cm, in the range of from 30 Ω·cm to 1,600 Ω·cm, in the range of from 90 Ω·cm to 1,600 Ω·cm, in the range of from 100 Ω·cm to 1,600 Ω·cm, in the range of from 120 Ω·cm to 1,600 Ω·cm, in the range of from 950 Ω·cm to 1,600 Ω·cm, in the range of from 30 Ω·cm to 950 Ω·cm, in the range of from 90 Ω·cm to 950 Ω·cm, in the range of from 100 Ω·cm to 950 Ω·cm, in the range of from 120 Ω·cm to 950 Ω·cm, in the range of from 30 Ω·cm to 120 Ω·cm, in the range of from 90 Ω·cm to 120 Ω·cm, in the range of from 100 Ω·cm to 120 Ω·cm, in the range of from 30 Ω·cm to 100 Ω·cm, in the range of from 90 Ω·cm to 100 Ω·cm, in the range of from 30 Ω·cm to 90 Ω·cm.

In some embodiments of the present application, the average grain size D of the positive electrode material is within a specific range. The inventors of the present application have found that the average grain size of the positive electrode material is an important parameter affecting the powder resistivity of the material. If the grain size of the positive electrode material is too large, the electron conductivity and ion conductivity of the positive electrode material are both worse, and therefore, the electrochemical kinetics performance during the charge and discharge process is worse, the polarization is larger, the capacity and the coulombic efficiency of the battery are lower and their attenuation during the cycle process are faster. If the grain size of the positive electrode material is too small, the particles will have more defects in the crystallinity and the chemical composition, which will also affect the exertion of the electrochemical performance of the battery. Therefore, optionally, the average grain size D of the positive electrode material is in the range of from 0.01 micron to 20 micron, optionally in the range of from 0.05 micron to 5 micron.

The inventors of the present application have found that conventional positive electrode materials, for example, the positive electrode material synthesized by a hydrothermal or solvent method disclosed in CN105428649, usually have a too small grain size and a too large specific surface area. This kind of material cannot achieve the expected electrochemical performance, because there is a large plurality of defects in the crystallinity and the chemical composition due to the too small grain size. Moreover, a too high specific surface area will results in an extremely serious solvent-absorption phenomenon during the stirring process of the slurry, the solid content of the slurry is lower, the electrode plate has striation and a small pressed density, thereby seriously decreasing the capacity, the coulombic efficiency and the overall energy density of the battery. As a contrast, the positive electrode material of the present application has an appropriate grain size, and also may have an appropriate specific surface area, thus exhibiting excellent electrochemical performance. Moreover, the positive electrode material of the present application may be synthesized by a solid-state reaction method, which has advantages of simple operation and strong practicability, and therefore, the positive electrode material of the present application has a broader industrial prospect.

Optionally, the specific surface area of the positive electrode material may be in the range of from 0.01 m²/g to 30 m²/g, optionally in the range of from 1 m²/g to 20 m²/g.

In some embodiments of the present application, the carbon content of the positive electrode material is within a specific range. The inventors of the present application have found that the carbon content of the positive electrode material is also an important parameter affecting the powder resistivity of the material. If the carbon content of the positive electrode material is too high, it will adversely affect the crystallinity of the sodium halophosphate crystal in the in-situ synthesis of the composite of sodium halophosphate with carbon and the uniformity of the distribution of carbon in the composite. Moreover, because the carbon has strong solvent-absorption, the presence of excess carbon also greatly increases the viscosity of the slurry, so that the pressed density of the prepared electrode plate is too high and the distribution of the active material film on the electrode plate is non-uniform. If the carbon content of the positive electrode material is too low, it will not achieve the object of improving the electrochemical activity of the material, and the initial capacity and the rate performance of the battery. Therefore, optionally, the positive electrode material has a carbon content in the range of from 0.05 wt% to 15 wt%, optionally has a carbon content in the range of from 0.5 wt% to 5 wt%, the carbon content is calculated based on the amount of carbon source delivered in the preparation of the positive electrode material comprising the composite of sodium halophosphate with carbon.

In the positive electrode material according to the present application, the type of the carbon is not specifically limited, and may be selected according to actual needs. Specifically, the carbon may be inorganic conductive carbon, or may be derived from organic carbon. The inorganic conductive carbon may be selected from one or more of acetylene black, conductive carbon black, conductive graphite, Ketjen black, carbon nanotubes, carbon nanobelts, carbon fiber, graphene and carbon dots. The organic carbon may be selected from one or more of carbohydrates (such as glucose, fructose, sucrose, maltose, starch, cellulose and the like), citric acid, ascorbic acid, glutamic acid, polypyrrole, polyaniline, polythiophene, poly(3,4-ethylenedioxythiophene), polystyrene sulfonate, polyphenylene sulfide and derivatives thereof. However, in view of factors such as production cost and conductivity, optionally, the carbon of the positive electrode active material may be derived from glucose, sucrose, Ketjen black, polypyrrole, or any combination thereof, optionally, derived from Ketjen black.

Optionally, the primary particles of the positive electrode material are in a shape of flake, sphere or polyhedron.

Optionally, the positive electrode material has a tapped density in the range of from 0.5 g/cm³ to 2.5 g/cm³, more optionally in the range of from 0.7 g/cm³ to 2.0 g/cm³.

Optionally, the positive electrode material has a compacted density in the range of from 1.5 g/cm³ to 3.5 g/cm³ under a pressure of 8 tons, more optionally in the range of from 2.0 g/cm³ to 3.0 g/cm³.

In some embodiments of the present application, the positive electrode material is obtained as follows:
i) sufficiently mixing materials for forming a composite of sodium halophosphate with carbon in the presence of a solvent to form a uniform powder; and
ii) thermally treating the uniform powder in an inert atmosphere and at a temperature of from 500 °C to 700 °C to form the positive electrode material.

Therefore, the second aspect of the present application relates to a method for preparing the positive electrode material for the sodium-ion battery according to the above-described first aspect, which comprises:
i) sufficiently mixing materials for forming a composite of sodium halophosphate with carbon in the presence of a solvent to form a uniform powder; and
ii) thermally treating the uniform powder in an inert atmosphere and at a temperature of from 500 °C to 700 °C to form the positive electrode material.

The inventors of the present application have found that in the preparation of the positive electrode material of the present application, the step i) of sufficiently mixing the materials for forming the composite of sodium halophosphate with carbon is important to obtain the positive electrode material with the appropriate resistivity. Optionally, the materials are sufficiently mixed such that when X-ray photoelectron spectroscopy (XPS) is used to detect three or more samples in different regions of the mixed materials, the obtained results indicate that the differences in composition and amount of each sample are no more than 5%, optionally no more than 2%, more optionally no more than 1%, still more optionally no more than 0.5%, even more optionally no more than 0.1%. More importantly, the crystallization speed of the positive electrode material is controllable under such mixing condition, and the positive electrode material with the appropriate grain size may be obtained. In the above step i), the mixing is carried out by ball mill, roll mill, centrifugal mill, stirring mill, jet mill, sand mill or Raymond mill. In one embodiment of the present application, the mixing may be carried out by a laboratory-scale high-energy ball mill or planetary ball mill. In some other embodiments of the present application, the mixing may be carried out by an industrial-scale stirring mill or jet mill.

In step i), the materials for forming a composite of sodium halophosphate with carbon comprises a precursor. The precursor comprises a sodium precursor, a halogen precursor (for example, a fluorine precursor), a phosphate and other metal precursors. As an example, the phosphate may be selected from one or more of ammonium phosphate, ammonium phosphate dibasic, ammonium dihydrogen phosphate, trisodium phosphate, sodium phosphate dibasic, sodium phosphate monobasic, potassium phosphate, potassium phosphate dibasic, potassium phosphate monobasic and phosphoric acid. As an example, the fluorine precursor may be selected from one or more of ammonium fluoride, lithium fluoride, sodium fluoride, potassium fluoride and hydrogen fluoride. As an example, the sodium precursor may be selected from one or more of trisodium phosphate, sodium phosphate dibasic, sodium phosphate monobasic and sodium fluoride. As an example, other metal precursors comprises a manganese source, an iron source or a combination thereof, the manganese source may be selected from one or more of manganese nitrate, manganese chloride, manganese sulfate, manganese triacetate dihydrate, manganese oxalate, manganese carbonate and manganese hydroxide, and the iron source may be selected from one or more of ferrous nitrate, ferric nitrate, ferrous chloride, ferric chloride, ferrous sulfate, ferric sulfate, ferrous oxalate, ferrous acetate and ferric acetate.

In step i), the materials for forming the composite of sodium halophosphate with carbon comprises a carbon source. The carbon source may be an inorganic carbon, an organic carbon or a mixture thereof. As an example, the inorganic carbon may be selected from one or more of acetylene black, conductive carbon black, conductive graphite, Ketjen black, carbon nanotubes, carbon nanobelts, carbon fiber, graphene and carbon dots. The organic carbon may be selected from one or more of glucose, fructose, sucrose, maltose, starch, cellulose, citric acid, ascorbic acid, glutamic acid, polypyrrole, polyaniline, polythiophene, poly(3,4-ethylenedioxythiophene), polystyrene sulfonate, polyphenylene sulfide and derivatives thereof.

In step i), the materials for forming the composite of sodium halophosphate with carbon further optionally comprises a complexing agent. The complexing agent may be selected from one or more of ammonium hydroxide, crystalammonia, urea, hexamethylenetetramine, ethylenediaminetetraacetic acid, citric acid and ascorbic acid.

In step i), the solvent is selected from one or more of deionized water, methanol, ethanol, acetone, isopropanol, n-hexanol, dimethylformamide, ethylene glycol and diethylene glycol.

The inventors of the present application have found that, in the preparation of the positive electrode material of the present application, the step ii) of thermally treating the uniform powder in an inert atmosphere and at a temperature of from 500 °C to 700 °C is important to obtain the positive electrode material with the appropriate resistivity. At such a heating temperature, the formed carbon may be uniformly distributed in the positive electrode material, and the grains of the positive electrode material will not be damaged. In contrast to the conventional solid-state method (for example, the high-temperature solid-state method disclosed in CN1948138A), the thermally treating step of the present application needs to be carried out at a relatively low temperature (for example, from 500 °C to 700 °C), which not only reduces energy consumption, but also avoids problems of nonuniform distribution of carbon materials and damage of crystal form of the sodium halophosphate caused by excessive sintering the carbon source during the thermally treating process and the in turn resulted problem of a too high resistivity of the positive electrode active material.

Optionally, the preparation of the positive electrode material of the present application further comprises steps of washing and drying the positive electrode material obtained in step ii).

In one embodiment of the present application, the positive electrode active material has a first discharge voltage platform positioned between 2.95 V and 3.15 V and a second discharge voltage platform positioned between 2.75 V and 2.95 V (a reference voltage of the positive electrode material to the metal sodium); the discharge capacity of the positive electrode active material at the first discharge voltage platform is Q1, the discharge capacity of the positive electrode active material at the second discharge voltage platform is Q2, the full discharge capacity of the positive electrode active material is Q, and Q1, Q2 and Q satisfy: 50% ≤ (Q1+Q2)/Q×100% ≤ 95%, optionally 70% ≤ (Q1+Q2)/Q×100% ≤ 90%. Moreover, most of the capacity can be exerted at the platform, and therefore, the sodium-ion battery manufactured from the positive electrode active material of the present application may be charged and discharged in a wider electrochemical window and without affecting the capacity and the energy density of the battery.

In view of the above effects, a third aspect of the present application provides a sodium-ion battery comprising a positive electrode, a negative electrode, a separator and an electrolytic solution, wherein the positive electrode material of the sodium-ion battery is the positive electrode material for the sodium-ion battery according to the above-described first aspect or the positive electrode material for the sodium-ion battery prepared by the method according to the above-described second aspect.

The present application has no special limitation on the preparation method of the sodium-ion battery, and the technical solution of preparing the sodium-ion battery from the positive electrode material is well known to a person skilled in the art.

In one embodiment of the present application, a button battery is prepared as follows:

### 1. Preparation of a positive electrode plate

A positive electrode active material according to the present application, conductive carbon, and polyvinylidene fluoride (PVDF) as a binder are sufficiently mixed at a weight ratio of 7:2:1 with stirring in an appropriate amount of N-methyl pyrrolidone (abbreviated as NMP) as a solvent to form a uniform positive electrode slurry; an A1 foil coated with carbon as a positive electrode current collector is coated with the slurry, thereby obtaining a small wafer with a diameter of 14 mm after drying and die cutting.

### 2. Preparation of an electrolytic solution

An equal volume of ethylene carbonate is dissolved in propylene carbonate, and then an appropriate amount of sodium perchlorate is uniformly dissolved in the mixed solvent for later use.

### 3. Negative electrode plate: a sodium metal sheet is used.

### 4. Separator: there is no special selection, glass fiber or non-woven fabric may be used.

### 5. Preparation of a button battery:

The positive electrode plate, the separator and the negative electrode plate are stacked in order in which the separator is disposed between the positive electrode plate and the negative electrode plate to serve as an isolation, the electrolytic solution prepared above is injected into the electrode assembly, and the preparation of the button battery is completed.

A sodium-ion battery according to a third aspect of the present application is described with reference to the drawings.

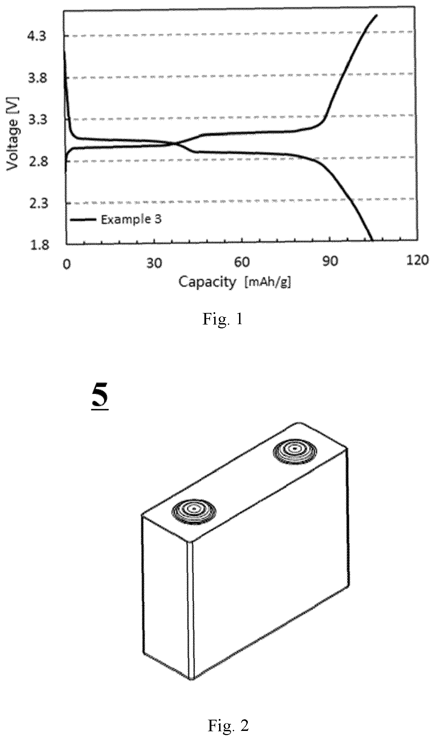

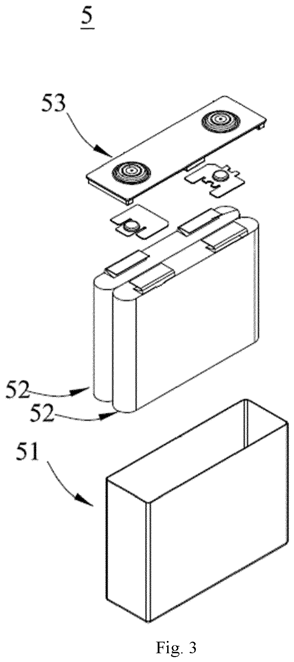

Fig. 2 is a perspective view of an embodiment of a sodium-ion battery 5. Fig. 3 is an exploded view of Fig. 2. Referring to Fig. 2 to Fig. 3, the sodium-ion battery 5 includes a shell 51, an electrode assembly 52, a cover plate 53 and an electrolytic solution (not shown).

The electrode assembly 52 is received in the shell 51. The number of the electrode assemblies 52 is not limited, which may be one or more. The electrode assembly 52 includes a positive electrode plate, a negative electrode plate and a separator. The separator separates the positive electrode plate and the negative electrode plate. The electrolytic solution is injected into the shell 51 and infiltrates the electrode assembly 52, the electrode assembly includes, for example, a first electrode plate, a second electrode plate and a separator.

It should be noted that the sodium-ion battery 5 shown in Fig. 2 is a tank-type battery, but is not limited thereto, the sodium-ion battery 5 may also be a pocket-type battery, that is, the shell 51 is replaced by a metal-plastic film and the cover plate 53 is eliminated.

Next, a battery module according to a fourth aspect of the present application is described.

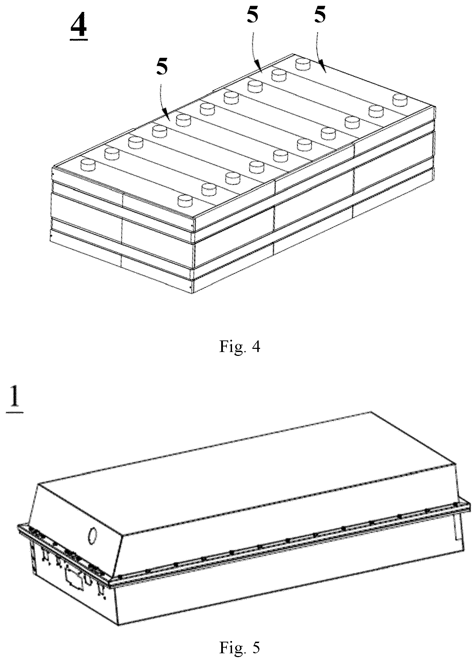

Fig. 4 is a perspective view of an embodiment of a battery module 4.

The battery module 4 according to the fourth aspect of the present application includes the sodium-ion battery 5 according to the third aspect of the present application.

Referring to Fig. 4, the battery module 4 includes a plurality of sodium-ion batteries 5. The plurality of sodium-ion batteries 5 are arranged longitudinally. The battery module 4 may be used as a power source or an energy storage device. The number of sodium-ion batteries 5 in the battery module 4 may be adjusted according to the application and capacity of the battery module 4.

Next, a battery pack according to a fifth aspect of the present application is described.

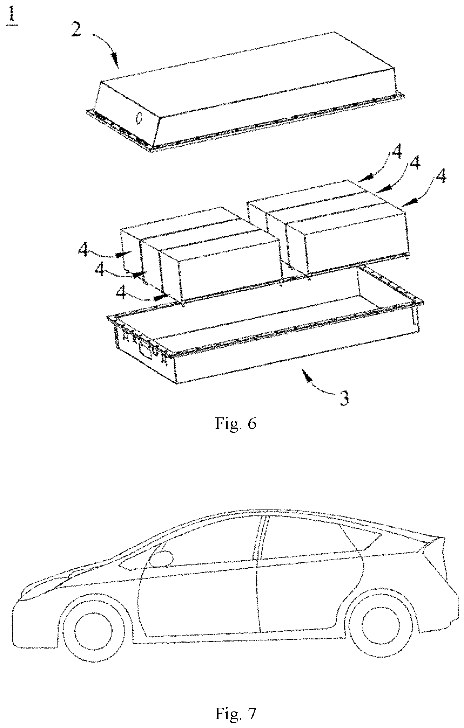

Fig. 5 is a perspective view of an embodiment of a battery pack 1. Fig. 6 is an exploded view of Fig. 5.

The battery pack 1 provided in the fifth aspect of the present application includes the battery module 4 according to the fourth aspect of the present application.

Specifically, referring to Fig. 5 and Fig. 6, the battery pack 1 includes an upper case body 2, a lower case body 3 and a battery module 4. The upper case body 2 and the lower case body 3 are assembled together to form a space for receiving the battery module 4. The battery module 4 is placed in the space where the upper case body 2 and the lower case body 3 are assembled together. An output electrode of the battery module 4 passes through one or both of the upper case body 2 and the lower case body 3 to supply power to the outside or be charged from the outside. The number and arrangement of the battery modules 4 in the battery pack 1 may be determined according to actual needs.

Next, an apparatus according to a sixth aspect of the present application is described.

Fig. 7 is a perspective view of an embodiment of an apparatus using the sodium-ion battery as a power source.

The apparatus according to the sixth aspect of the present application includes the sodium-ion battery 5 according to the third aspect of the present application, the sodium-ion battery 5 may be used as a power source or an energy storage unit of the apparatus. As shown in Fig. 7, the apparatus using the sodium-ion battery 5 is an electric car. Of course, the present application is not limited thereto, the apparatus using the sodium-ion battery 5 may be any electric vehicles other than the electric car (for example, an electric bus, an electric tramcar, an electric bicycle, an electric motorcycle, an electric scooter, an electric golf vehicle, an electric truck), an electric ship, an electric tool, an electronic equipment and an energy storage system. The electric car may be a pure electric vehicle, a hybrid electric vehicle and a plug-in hybrid electric vehicle. Of course, according to actual use, the apparatus provided in the sixth aspect of the present application may include the battery module 4 according to the fourth aspect of the present application, of course, the apparatus provided in the sixth aspect of the present application may also include the battery pack 1 according to the fifth aspect of the present application.

### Examples

In order to facilitate understanding of the present application, the examples of the present application are described as follows. It should be apparent to those skilled in the art that these examples are only used for understanding the present application, and should not be regarded as a specific limitation of the present application.

### Test methods

### Powder resistivity

The positive electrode material was dried, and an appropriate amount of powder was weighed, and then a powder resistivity tester with a device model of ST 2722 digital four-probe instrument was used to measure the powder resistivity of the sample with reference to GB/T 30835-2014 entitled "lithium iron phosphate-carbon composite positive electrode materials for lithium-ion battery".

### Carbon content

The carbon content of the powder was measured by using a C content analyzer with a device model of HCS -140 and with reference to GBT 20123-2006 entitled "steel and iron-determination of total carbon and sulfur content infrared absorption method after combustion in an induction furnace (routine method)".

### Grain size

The crystal structure and the grain size of the positive electrode active material might be determined by an X-ray powder diffractometer (for example, Brucker D8A_A25 X-ray diffractometer from Bruker AXS, Germany), using CuK_{α} ray as a radiation source at a ray wavelength λ of 1.5418 Å, with a scanning angle 2θ ranging from 10° to 90° and a scanning rate of 4°/min. After the diffraction pattern of the powder was obtained, a diffraction peak with a proper diffraction intensity and a proper 2θ position was selected, and the grain size was calculated according to Scherrer formula.

### First cycle discharge specific capacity

At 1.8 V to 4.5 V, it was charged at 0.1 C to 4.5 V, then charged at a constant voltage of 4.5 V to a current of ≤ 0.05 mA and kept standing for 2 minutes, the charge capacity at this time was recorded as C0; and then it was discharged at 0.1 C to 1.8 V, the discharge capacity at this time was the first cycle discharge specific capacity and recorded as DO.

### 2 C discharge specific capacity

At 1.8 V to 4.5 V, it was charged at 2 C to 4.5V, then charged at a constant voltage of 4.5 V to a current of ≤ 0.05 mA and kept standing for 2 minutes, the charge capacity at this time was recorded as C0; and then it was discharged at 2 C to 1.8 V, the discharge capacity at this time was 2 C discharge specific capacity and recorded as Dn.

### Preparation of positive electrode active material

Sodium fluoride, ferrous oxalate and sodium phosphate monobasic were weighed according to a stoichiometric ratio so that the molar ratio of Na: Fe: P: F was 2:1:1:1. Then they were uniformly mixed with a certain amount of carbon source and ethanol to make the carbon content as shown in Table 1. The mixed powder was thermally treated in an argon atmosphere, the thermally treating temperature was in the range of from 500 °C to 800 °C, the thermally treating time was from 5 hours to 30 hours, and the argon flow was from 10 ml/min to 500 ml/min. Then the thermally-treated product was washed with an appropriate amount of deionized water, and then filtered, dried in a vacuum drying oven at 100 °C, pulverized, sieved and graded to obtain the positive electrode active material of the present application.

In contrast, the positive electrode active materials of Comparative Examples 1-3 were prepared by the above-described method, except that the carbon contents were different, wherein Comparative Example 1 did not contain carbon, the carbon content of Comparative Example 2 was less than 0.05 wt %, and the carbon content of Comparative Example 3 was more than 15 wt %.

Similarly, as a contrast, the positive electrode active materials of Comparative Examples 4-5 were prepared by the above-described method, except that the sieved positive active materials had a grain size different from the present application, wherein Comparative Example 4 had a grain size of less than 0.01 micron, and Comparative Example 5 had a grain size of more than 20 micron.

The powder resistivity, the carbon content and the grain size of the positive electrode active material of the present application and the positive electrode active material for comparison were measured according to the above-described test section, and the results were summarized in Table 1 below.

### Manufacture of sodium-ion battery

### 1. Preparation of a positive electrode plate:

The positive electrode active material of the present application or the positive electrode active material for comparison, conductive carbon, and polyvinylidene fluoride (PVDF) as a binder were sufficiently mixed at a weight ratio of 7:2:1 with stirring in an appropriate amount of N-methyl pyrrolidone (abbreviated as NMP) as a solvent to form a uniform positive electrode slurry; an Al foil coated with carbon as a positive electrode current collector was coated with the slurry, thereby obtaining a small wafer with a diameter of 14 mm after drying and die cutting.

### 2. Preparation of an electrolytic solution:

An equal volume of ethylene carbonate was dissolved in propylene carbonate, and then an appropriate amount of sodium perchlorate was uniformly dissolved in the mixed solvent so as to form an electrolytic solution with a concentration of 1 mol/L for later use.

### 3. Negative electrode plate: a sodium metal sheet was used.

### 4. Separator: glass fiber was used.

### 5. Preparation of a button battery:

The positive electrode plate, the separator and the negative electrode plate were stacked in order in which the separator was disposed between the positive electrode plate and the negative electrode plate to serve as an isolation, the electrolytic solution prepared above was injected into the electrode assembly, and the preparation of the button cell was completed.

The first cycle discharge specific capacity and 2 C discharge specific capacity of the manufactured button batteries were measured according to the above-described test section, and the results were summarized in Table 1 below. Fig. 1 was a first charge and discharge curve of a button battery manufactured from the positive electrode active material of Example 3.

**Table 1: Combination, structural property and electrical performance of positive electrode active material**

| | Powder resistivity [Ω·cm] | Type of carbon source | Carbon content [wt%] | Grain size [µm] | First cycle discharge specific capacity [mAh/g] | 2C discharge specific capacity [mAh/g] |
|---|---|---|---|---|---|---|
| Example 1 | 10 | Glucose | 14 | 0.1 | 106 | 95 |
| Example 2 | 20 | Glucose | 9 | 0.1 | 109 | 97 |
| Example 3 | 100 | Glucose | 3 | 0.1 | 111 | 100 |
| Example 4 | 2000 | Glucose | 1 | 0.1 | 116 | 105 |
| Example 5 | 3000 | Glucose | 0.6 | 0.1 | 114 | 101 |
| Example 6 | 5000 | Glucose | 0.07 | 0.1 | 107 | 92 |
| Example 7 | 30 | Ketjen black | 4 | 0.03 | 122 | 110 |
| Example 8 | 800 | Polypyrrole | 4 | 0.03 | 102 | 88 |
| Example 9 | 90 | Sucrose | 4 | 0.03 | 119 | 107 |
| Example 10 | 120 | Sucrose | 4 | 0.08 | 120 | 104 |
| Example 11 | 950 | Sucrose | 4 | 0.2 | 118 | 103 |
| Example 12 | 1600 | Sucrose | 4 | 1 | 115 | 99 |
| Example 13 | 3500 | Sucrose | 4 | 3 | 113 | 91 |
| Example 14 | 4800 | Sucrose | 4 | 8 | 102 | 86 |
| Comparative Example 1 | 12000 | - | - | 0.1 | 21 | 10 |
| Comparative Example 2 | 9000 | Glucose | 0.04 | 0.8 | 65 | 23 |
| Comparative Example 3 | 6500 | Glucose | 20 | 2 | 71 | 29 |
| Comparative Example 4 | 6000 | Glucose | 4 | 0.005 | 73 | 31 |
| Comparative Example 5 | 8500 | Glucose | 4 | 21 | 62 | 24 |

It could be seen from the data of Table 1, the carbon content and the grain size of the positive electrode active material in the form of a composite of sodium halophosphate with C both had significant effects on the powder resistivity of the positive electrode material, and the powder resistivity of the positive electrode active material would further affect the electrochemical performance of the sodium-ion battery, especially the discharge specific capacity and the rate performance.

Because the intrinsic electron conductivity of the positive electrode material was lower, when the grain size of the material was larger, the electron transmission path inside the grain of the material was longer, resulting in a higher resistivity of the material and the electrode plate and a worse rate performance of the battery; when the grain diameter of the material was smaller, the electron transmission path inside the active material particles was shorter, the electrons could diffuse faster to the surface of the material and contact the medium with a better electron conductivity, and therefore, the electron conductivity of the material and the electrode plate was improved, and the rate performance of the sodium-ion battery was also better.

Because this kind of positive electrode material had better structure stability, chemical stability and electrochemical stability, irreversible phase change and irreversible distortion or collapse of the structure would not occur during the cycle process, so that a good main frame capable of reversible deintercalation and intercalation of sodium ions was formed, thereby ensuring the exertion of the capacity and the excellent cycle performance of the sodium-ion battery.

Although the present application has been described with reference to a large number of embodiments and examples, a person of ordinary skill in the art can recognize that other embodiments can be designed according to the content disclosed in the present application, which does not depart from the protection scope of the present application.

## Claims

1. A positive electrode material for a sodium-ion battery comprising a composite of sodium halophosphate with carbon having the following molecular formula:
Na*₂*M1*ₕ*M2*ₖ*(PO*₄*)X/C
in which M1 and M2 are transition metal ions each independently selected from Ti, V, Cr, Mn, Fe, Co, Ni, Cu, Zn, Ga, Sr, Y, Nb, Mo, Sn, Ba and W; h is from 0 to 1, k is from 0 to 1, and h+k = 1; X is halogen ion selected from F, Cl and Br,
wherein the positive electrode material has a powder resistivity in the range of from 10 Ω·cm to 5,000 Ω·cm under a pressure of 12 MPa, optionally in the range of from 20 Ω·cm to 2,000 Ω·cm.

2. The positive electrode material for the sodium-ion battery according to claim 1, wherein the positive electrode material has a grain size in the range of from 0.01 micron to 20 micron, optionally in the range of from 0.05 micron to 5 micron.

3. The positive electrode material for the sodium-ion battery according to claim 1 or 2, wherein the positive electrode material has a carbon content in the range of from 0.05 wt% to 15 wt%.

4. The positive electrode material for the sodium-ion battery according to any one of claims 1-3, wherein the carbon of the positive electrode material is derived from a carbon source comprising an inorganic carbon, an organic carbon or a combination thereof.

5. The positive electrode material for the sodium-ion battery according to claim 4, wherein the organic carbon is selected from one or more of glucose, fructose, sucrose, maltose, starch, cellulose, citric acid, ascorbic acid, glutamic acid, polypyrrole, polyaniline, polythiophene, poly(3,4-ethylenedioxythiophene), polystyrene sulfonate, polyphenylene sulfide and derivatives thereof.

6. The positive electrode material for the sodium-ion battery according to claim 4, wherein the inorganic carbon is selected from one or more of acetylene black, conductive carbon black, conductive graphite, Ketjen black, carbon nanotubes, carbon nanobelts, carbon fiber, graphene and carbon dots.

7. A preparation method for preparing the positive electrode material for the sodium-ion battery according to any one of claims 1 to 6, wherein the positive electrode material is obtained as follows:
i) sufficiently mixing materials for forming a composite of sodium halophosphate with carbon in the presence of a solvent to form a uniform powder; and
ii) thermally treating the uniform powder in an inert atmosphere and at a temperature of from 500 °C to 700 °C to form the positive electrode material.

8. The preparation method of the positive electrode material for the sodium-ion battery according to claim 7, wherein the mixing is carried out by ball mill, roll mill, centrifugal mill, stirring mill, jet mill, sand mill and Raymond mill.

9. The preparation method of the positive electrode material for the sodium-ion battery according to claim 7 or 8, wherein the solvent is selected from one or more of deionized water, methanol, ethanol, acetone, isopropanol, n-hexanol, dimethylformamide, ethylene glycol and diethylene glycol.

10. A sodium-ion battery comprising a positive electrode, a negative electrode, a separator and an electrolytic solution, wherein the active material of the positive electrode comprises the positive electrode material according to any one of claims 1-6 or the positive electrode material prepared by the method according to any one of claims 7-9.

11. A battery module comprising the sodium-ion battery according to claim 10.

12. A battery pack comprising the battery module according to claim 11.

13. An apparatus comprising the sodium-ion battery according to claim 10, wherein the sodium-ion battery is used as a power source or an energy storage unit of the apparatus; optionally, the apparatus comprises an electric vehicle, a hybrid electric vehicle, a plug-in hybrid electric vehicle, an electric bicycle, an electric scooter, an electric golf vehicle, an electric truck, an electric ship and an energy storage system.
